# EUROPÄISCHE PATENTANMELDUNG

(11) **EP 3 604 009 A1**
(43) Veröffentlichungstag der Anmeldung: **05.02.2020**
(21) Anmeldenummer: 18186479.4
(22) Anmeldetag: 31.07.2018
(51) Int. Cl.: B60J 10/70, B60J 10/36

(54) **PROFILKÖRPER ZUM AUFNEHMEN UND HALTEN EINER FENSTERSCHEIBE UND FENSTERSYSTEM**

(71) Anmelder: Hübner GmbH & Co. KG, 34123 Kassel (DE)
(72) Erfinder: Pogorelow, Wjatscheslaw, 34537 Bad Wildungen (DE); Federov, Johann, 34123 Kassel (DE)

(57) **Zusammenfassung**

Die Erfindung betrifft einen Profilkörper (5) zum Aufnehmen und Halten einer Fensterscheibe in einem Fensterausschnitt einer Karosserie eines Fahrzeugs, insbesondere eines Fahrzeugs des öffentlichen Personentransports. Der Profilkörper (5) weist eine Aufnahme (10) zum Aufnehmen der Fensterscheibe und eine in einem Grundkörper (7) des Profilkörpers (5) vorgesehenen Ausnehmung (12), in die ein Füllerelement (8) des Profilkörpers (5) einsetzbar ist, auf. Die Ausnehmung (12) und das Füllerelement (8) sind dabei derart ausgebildet, dass durch Einsetzen des Füllerelements (8) in die Ausnehmung (12) eine in der Aufnahme (10) aufnehmbare Fensterscheibe in der Aufnahme (10) einspannbar ist. Ferner weist der Profilkörper (5) einen separat von dem Grundkörper (7) ausgebildeten Zusatzkörper (9) auf, der lösbar an dem Grundkörper (7) befestigt ist. Erfindungsgemäß ist die Aufnahme (10) einerseits durch einen von dem Grundkörper (7) ausgebildeten, ersten Aufnahmeabschnitt (13) und andererseits durch einen von dem Zusatzkörper (9) ausgebildeten, zweiten Aufnahmeabschnitt (29) gebildet.

## Beschreibung

Die Erfindung betrifft einen Profilkörper zum Aufnehmen und Halten einer Fensterscheibe in einem Fensterausschnitt einer Karosserie eines Fahrzeugs mit den Merkmalen des Oberbegriffs von Anspruch 1. Weiterhin betrifft die Erfindung ein Fenstersystem mit einem solchen Profilkörper.

### STAND DER TECHNIK

Bei Fahrzeugen des öffentlichen Personentransports, z. B. Schienenfahrzeugen wie Straßenbahnen und U-Bahnen oder Straßenfahrzeugen wie Bussen, sind Fensterscheiben in der Regel mit Hilfe von Profilkörpern aus einem elastomeren Werkstoff in einem Fensterausschnitt in der Karosserie des Fahrzeugs befestigt. Der Profilkörper weist dazu einerseits eine umlaufende Aufnahme zum Aufnehmen und Halten der Fensterscheibe und andererseits einen umlaufenden Befestigungsabschnitt zum Befestigen des Profilkörpers an der Karosserie bzw. eines daran befestigten Rahmenprofils auf.

Um Fenster in einem Schadensfall in kurzer Zeit ersetzen zu können, ist es aus dem Stand der Technik bekannt, den Profilkörper mit einem Grundkörper und einem in den Grundkörper einsetzbaren Füllerelement auszubilden. Durch Einsetzen des Füllerelements in eine dafür vorgesehene Ausnehmung in dem Grundkörper kann eine Fensterscheibe in der Aufnahme eingespannt werden. Wird das Füllerelement aus der Ausnehmung des Grundkörpers entnommen, entspannt sich die Aufnahme, so dass die Fensterscheibe wieder aus der Ausnehmung entnommen und eine neue Fensterscheibe eingesetzt werden kann.

Ein solcher Profilkörper, der eine Schnellwechselfähigkeit der Fensterscheibe gewährleistet, ist beispielsweise aus dem Dokument DE 201 02 538 U1 bekannt. Der dort offenbarte Profilkörper weist einen Grundkörper auf, in dem stirnseitig eine Nut vorgesehen ist, welche als Aufnahme für eine Fensterscheibe dient. Weiterhin weist der Grundkörper eine von der Seite her in den Grundkörper hineinragende Ausnehmung auf, in die ein Füllerelement des Profilkörpers eingesetzt werden kann. Durch das Einsetzen des Füllerelements in die Ausnehmung kommt es zu einer Verformung des Grundkörpers derart, dass zumindest einer der beiden die Nut seitlich begrenzenden Aufnahmeabschnitte in Richtung des gegenüberliegenden Aufnahmeabschnitts beaufschlagt wird. Dies führt dazu, dass eine in die Aufnahme eingesetzte Fensterscheibe in der Aufnahme eingespannt wird.

Ähnliche Lösungen sind auch aus den Dokumenten EP 2 801 493 A1 und DE 20 2012 010 934 U1 bekannt.

### OFFENBARUNG DER ERFINDUNG

Aufgabe der Erfindung ist es, einen Profilkörper bereitzustellen, mit dem es auf einfache Weise und in kurzer Zeit möglich ist, eine Fensterscheibe zu montieren und/oder zu demontieren, insbesondere ohne dass die Belastbarkeit der Befestigung und/oder Dichtigkeit im Bereich der Fensteraufnahme beeinträchtigt wird.

Die erfindungsgemäße Aufgabe wird gelöst durch einen Profilkörper mit den Merkmalen des unabhängigen Anspruchs 1. Ferner wird die erfindungsgemäße Aufgabe gelöst durch ein Fenstersystem mit den Merkmalen des unabhängigen Anspruchs 14.

Der Erfindung liegt die Erkenntnis zugrunde, dass die Montage bzw. Demontage einer Fensterscheibe bei den aus dem Stand der Technik bekannten Lösungen dadurch erschwert ist, dass die Fensterscheibe in eine umlaufende Aufnahme für die Fensterscheibe in Form einer in den Profilkörper hineinragenden Vertiefung, wie einer Nut, eingesetzt werden muss. Konkret entspricht bei den aus dem Stand der Technik bekannten Lösungen der freie Querschnitt des umlaufenden Profilkörpers lediglich im Bereich der Nut dem Querschnitt der Fensterscheibe. Im Bereich die Nut begrenzenden Aufnahmeabschnitte ist der freie Querschnitt jedoch kleiner als der Querschnitt der Fensterscheibe. D. h. zumindest einer der beiden die Aufnahme begrenzenden Aufnahmeabschnitte des Profilkörpers muss so weit verformt werden, dass die Fensterscheibe in die Aufnahme eingesetzt werden kann. Anschließend muss dieser Aufnahmeabschnitt wieder um die Fensterscheibe schnappen, um die Fensterscheibe sicher in der Aufnahme zu halten. Hierdurch gestaltet sich zum einen die Montage bzw. Demontage aufwändig. Zum anderen kann es beim Verformen und Aufweiten des Aufnahmeabschnitts zu einer Beeinträchtigung dessen Funktion in Hinblick auf eine sichere Befestigung und/oder einer abdichtenden Aufnahme der Fensterscheibe kommen.

Demgegenüber ist erfindungsgemäß vorgesehen, dass die Fensterscheibe frontal gegen einen dafür vorgesehenen Aufnahmeabschnitt eines Profilkörpers gesetzt werden kann. Anschließend wird ein von einem separaten Teil ausgebildeter Aufnahmeabschnitt auf der gegenüberliegenden Seite der Fensterscheibe zur Anlage gebracht und mit dem Teil verbunden, das den ersten Aufnahmeabschnitt ausbildet. So wird insgesamt ebenfalls eine zu beiden Seiten geschlossene Aufnahme für die Fensterscheibe gebildet, in der die Fensterscheibe sicher aufgenommen und befestigt ist. Die Montage und/oder Demontage ist dabei gegenüber dem Stand der Technik wesentlich einfacher, da es hierfür nicht erforderlich ist, einen der beiden Aufnahmeabschnitte zu verformen. Gleichzeitig sind die Aufnahmeabschnitte bei der Montage bzw. Demontage geringeren Belastungen ausgesetzt, wodurch deren Funktion zur sicheren und/oder abdichtenden Aufnahme nicht oder zumindest weniger stark beeinträchtigt werden.

Mit einem erfindungsgemäßen Profilkörper kann eine Fensterscheibe in einen Fensterausschnitt einer Karosserie eines Fahrzeugs aufgenommen und in diesem gehalten werden. Insbesondere kommt ein derartiger Profilkörper für Fahrzeuge des öffentlichen Personentransports zum Einsatz, bei denen es auf eine Schnellwechselfähigkeit der Fensterscheiben ankommt.

Der erfindungsgemäße Profilkörper weist einen Grundkörper sowie einen separat von dem Grundkörper ausgebildeten Zusatzkörper auf. Der Zusatzkörper ist dabei lösbar an dem Grundkörper befestigbar. D. h. der Zusatzkörper kann wahlweise an dem Grundkörper befestigt und wieder entfernt werden.

Um eine Fensterscheibe aufnehmen zu können, weist der Profilkörper eine entsprechende Aufnahme auf, in der die Fensterscheibe aufgenommen und von der sie gehalten werden kann. Die Aufnahme wird durch zwei Aufnahmeabschnitte gebildet, die erfindungsgemäß von zwei separaten und lösbar miteinander verbindbaren Bauteilen des Profilkörpers ausgebildet werden. Dabei wird ein erster Aufnahmeabschnitt von dem Grundkörper ausgebildet, während der zweite Aufnahmeabschnitt von dem daran lösbar befestigbaren Zusatzkörper ausgebildet wird. Zur Montage der Fensterscheibe wird der Zusatzkörper - sofern dieser schon an dem Grundkörper befestigt ist - von dem Grundkörper gelöst. Die Fensterscheibe kann dann ohne Behinderung gegen den ersten Aufnahmeabschnitt gesetzt werden. Anschließend kann der Zusatzkörper mit dem von ihm ausgebildeten zweiten Aufnahmeabschnitt montiert werden, so dass der zweite Aufnahmeabschnitt auf der gegenüberliegenden Seite der Fensterscheibe an dieser anliegt und die Fensterscheibe somit an ihrem Rand sandwichartig zwischen den beiden Aufnahmeabschnitten aufgenommen ist.

Um die Fensterscheibe sicher in der Aufnahme zu halten, ist in dem Grundkörper eine Ausnehmung vorgesehen, in die ein Füllerelement eingesetzt werden kann. Dabei sind die Ausnehmung und das Füllerelement derart ausgebildet, dass durch das Einsetzen des Füllerelements in die Ausnehmung eine in der Aufnahme aufgenommene Fensterscheibe in dieser eingespannt wird. Wird das Füllerelement aus der Ausnehmung entfernt, löst sich die Spannung und die Fensterscheibe kann - ggf. nach Entfernen des Zusatzkörpers - aus der Aufnahme entfernt werden.

Der Zusatzkörper kann auf beliebige Art lösbar an dem Grundkörper befestigt sein. Beispielsweise kann der Zusatzkörper durch eine formschlüssige und/oder kraftschlüssige Befestigung an dem Grundkörper befestigt sein. Konkret kann die lösbare Befestigung mittels einer Schraubverbindung realisiert sein. Es kann sich jedoch auch um eine (lösbare) Rast- oder Schnappverbindung handeln, wodurch sich die Montage des Zusatzkörpers besonders einfach gestalten lässt. Weiterhin kann der Zusatzkörper in eine weitere in dem Grundkörper vorgesehene Ausnehmung geklemmt sein. Beispielsweise kann die Klemmverbindung zustande kommen, wenn das Füllerelement in seine zugehörige Ausnehmung eingesetzt wird und es durch das Einsetzen des Füllerelements zu einer Verformung des Grundkörpers und somit auch der Ausnehmung, in die der Zusatzkörper eingesetzt ist, kommt. Wenn das Füllerelement aus seiner Ausnehmung entfernt wird, löst sich automatisch die Klemmverbindung, mittels der der Zusatzkörper in seiner zugehörigen Ausnehmung gehalten wird. D. h. in einem Schritt werden sowohl die Einspannung der Fensterscheibe in der Aufnahme als auch die Befestigung des Zusatzkörpers an dem Grundkörper gelöst, womit die Demontage der Fensterscheibe besonders einfach gestaltet werden kann.

Um die nötige Flexibilität zu gewährleisten, wie sie für ein sicheres Aufnehmen und Halten der Fensterscheibe in der Aufnahme des Profilkörpers erforderlich ist, sind der Zusatzkörper, das Füllerelement und/oder der Grundkörper bevorzugt aus einem elastomeren Werkstoff hergestellt. Es ist dabei nicht zwingend erforderlich, dass diese ausschließlich aus einem elastomeren Werkstoff hergestellt sind, sondern es können auch Bestandteile aus anderen Werkstoffen enthalten sein. Beispielsweise können Einleger aus einem Metall zur Verstärkung des Profilkörpers in bestimmten Bereichen vorgesehen sein, wie es z. B. aus dem Dokument EP 2 801 493 A1 bekannt ist. Auch können verschiedenen elastomere Werkstoffe zum Einsatz kommen, z. B. um unterschiedliche mechanische Eigenschaften der verschiedenen Bauteile des Profilkörpers oder verschiedener Abschnitt innerhalb eines Bauteils des Profilkörpers zu realisieren.

Gemäß einer erfindungsgemäßen Ausführungsform handelt es sich bei dem Zusatzkörper um das Füllerelement des Profilkörpers. Entsprechend wird der zweite Aufnahmeabschnitt gemäß dieser Ausführungsform von dem Füllerelement ausgebildet. So kommt man mit einer reduzierten Zahl an Bauteilen aus, wobei weiterhin die erfindungsgemäße Wirkung erzielt wird, da der zweite Aufnahmeabschnitt von einem von dem Grundkörper separaten Bauteil ausgebildet wird. Insbesondere kann bei dieser Ausführungsform die Fensterscheibe auf besonders einfache Weise montiert werden, da mit dem Einbringen des Füllerelements in die Ausnehmung des Grundkörpers gleichzeitig die zwei erforderlichen Montageschritte erfolgen: Zum einen wird mit dem Einsetzen, d. h. lösbaren Befestigen, des Füllerelements der zweite Aufnahmeabschnitt angeordnet, womit die Aufnahme für die Fensterscheibe komplettiert und die Fensterscheibe in der Aufnahme aufgenommen und beidseitig umschlossen wird. Zum anderen wird die Fensterscheibe mit dem Einsetzten des Füllerelements in die zugehörige Ausnehmung in der Aufnahme eingespannt und somit sicher in dieser gehalten. Es ergibt sich somit insgesamt kein Mehraufwand im Vergleich zu den aus dem Stand der Technik bekannten Lösungen. Vielmehr kann der Aufwand - bei gleicher Zahl an Bauteilen - durch das erleichterte Einbringen der Fensterscheibe in die Aufnahme weiter reduziert werden.

Insbesondere kann das Füllerelement gemäß dieser Ausführungsform einen Spannschenkel sowie einen als Aufnahmeabschnitt wirkenden Aufnahmeschenkel aufweisen, der von dem Spannschenkel abragt. Mit dem Spannschenkel ist dabei der Teil des Füllerelements bezeichnet, der zumindest teilweise in die Ausnehmung des Grundkörpers hineinragt, wenn das Füllerelement in die Ausnehmung eingesetzt ist. Das Füllerelement kann auch mehrere Spannschenkel aufweisen, die in weitere jeweils zugehörige Ausnehmungen in dem Grundkörper hineinragen, ähnlich wie es in dem Dokument DE 20 2012 010 934 U1 gezeigt ist.

Der Aufnahmeschenkel ragt bei dieser Ausführungsform von dem Spannschenkel unter einem Winkel ab. Der Winkel liegt dabei vorzugsweise im Bereich von 100° bis 140°, insbesondere bei ca. 120°.

Wenn der zweite Aufnahmeabschnitt von dem Füllerelement ausgebildet ist, ist es möglich, dass das Füllerelement und der davon ausgebildete zweite Aufnahmeabschnitt aus dem gleichen Werkstoff hergestellt sind. Es kann aber vorteilhaft sein, wenn der zweite Aufnahmeabschnitt und das Füllerelement, d. h. dessen restlicher Teil, aus unterschiedlichen Materialien hergestellt sind. Insbesondere lassen sich so unterschiedliche mechanische Eigenschaften realisieren. Gemäß einer Ausführungsform ist beispielsweise vorgesehen, dass das Füllerelement, insbesondere sein Spannschenkel, mit dem das Füllerelement (zumindest teilweise) in die Ausnehmung im Grundkörper hineinragt, aus einem weniger elastischen Werkstoff ausgebildet ist als der zweite Aufnahmeabschnitt. So kann sich der zweite Aufnahmeabschnitt besonders gut an eine zu haltende Fensterscheibe anlegen. Gleichzeitig kann durch die weniger elastische Ausbildung des Spannschenkels z. B. verhindert werden kann, dass dieser schon bei geringen Belastungen aus der Ausnehmung herausrutscht, was zu einem ungewollten Lösen der Fensterscheibe aus der Aufnahme führen würde.

Konkret kann die Härte des zweiten Aufnahmeabschnitts im Bereich von 50 bis 70 Shore und insbesondere bei ca. 60 Shore liegen, während die Härte des Füllerelements, insbesondere seines Spannschenkels, im Bereich von 71 bis 90 Shore und insbesondere bei ca. 80 Shore liegt.

Gemäß einer Ausführungsform des erfindungsgemäßen Profilkörpers ist der zweite Aufnahmeabschnitt einstückig mit dem Zusatzkörper, insbesondere dem Füllerelement, ausgebildet. Durch die integrale Ausbildung des zweiten Aufnahmeabschnitts mit dem Zusatzkörper und insbesondere dem Füllerelement ergibt sich insgesamt eine besonders solide und leicht zu fertigende Baueinheit. Es kann aber auch vorgesehen sein, dass der Zusatzkörper ein Basisbauteil aufweist, an dem der zweite Aufnahmeabschnitt als ein davon separates Bauteil befestigt ist. Z. B. kann der Spannschenkel des Füllerelements ein solches Basisbauteil darstellen, an dem der zweite Aufnahmeabschnitt als ein davon separates Bauteil befestigt ist. Beispielsweise kann der zweite Aufnahmeabschnitt mittels einer Klebverbindung an dem Spannschenkel befestigt sein.

Gemäß einer Ausführungsform ist der Zusatzkörper, insbesondere das als Zusatzkörper dienende Füllerelement, mit dem von ihm ausgebildeten zweiten Aufnahmeabschnitt als ein Koextrusionsteil hergestellt. So lässt sich insbesondere ein integral ausgebildeter Zusatzkörper herstellen, der in verschiedenen Bereichen verschiedene Materialien und somit in diesen verschiedenen Bereichen verschiedene mechanische Eigenschaften aufweist. Z. B. kann so ein einstückiges Füllerelement hergestellt werden, wobei sein Spannschenkel aus einem weniger elastischen elastomeren Werkstoff hergestellt ist als der integral von dem Füllerelement ausgebildete Aufnahmeschenkel. Es sind aber auch andere Herstellungsverfahren möglich. Beispielsweise kann der Aufnahmeschenkel auch an den Spannschenkel anvulkanisiert sein.

Die von dem Profilkörper ausgebildete Aufnahme sollte idealerweise eine der Fensterscheibe entsprechende Form aufweisen. Konkret kann die Aufnahme derart geformt sein, dass sich ein im Wesentlichen U-förmiger freier Querschnitt für die Fensterscheibe ergibt. Ein solcher Querschnitt kann beispielsweise dadurch realisiert werden, dass einer der beiden Aufnahmeabschnitte eine im Querschnitt L-förmige Anlagefläche für die Fensterscheibe aufweist, während der andere Aufnahmeabschnitt eine im wesentlichen plane Anlagefläche für die Fensterscheibe aufweist. Alternativ können jedoch auch beide Aufnahmeabschnitte zueinander gespiegelte L-förmige Anlageflächen für die Fensterscheibe aufweisen. Weiterhin kann vorgesehen sein, dass an den Aufnahmeabschnitten Rippen vorgesehen sind, wodurch z. B. ein besserer Halt der Fensterscheibe in der Aufnahme realisiert werden kann.

Eine abdichtende Aufnahme der Fensterscheibe kann erreicht werden, wenn an beiden Aufnahmeabschnitten jeweils eine daran angeformte Dichtlippe vorgesehen ist. Diese legt sich mit dem Einsetzen des Füllerelements in die Ausnehmung in dem Grundkörper und dem daraus resultierenden Einspannen der Fensterscheibe in der Aufnahme an die jeweilige Oberfläche der Fensterscheibe an. So kann einem Eindringen von Feuchtigkeit und/oder Schmutz vorgebeugt werden. Insbesondere kann die Dichtlippe jeweils stirnseitig an dem Aufnahmeabschnitt angeordnet sein, d. h. an dem zum Zentrum des Fensterausschnitts weisenden Ende.

Um die Fensterscheibe letztlich an der Karosserie des Fahrzeugs befestigen zu können, weist der Profilkörper gemäß einer Ausführungsform einen entsprechenden Befestigungsabschnitt auf, mit dem der Profilkörper und somit auch eine von ihm aufgenommene Fensterscheibe an der Karosserie befestigt werden kann. Dabei kann der Befestigungsabschnitt zur unmittelbaren, aber auch zur mittelbaren Befestigung des Profilkörpers an der Karosserie dienen. Beispielsweise ist in dem Fensterausschnitt in der Karosserie üblicherweise ein Rahmenprofil vorgesehen, wobei der Profilkörper durch seinen Befestigungsabschnitt mit diesem Rahmenprofil befestigt werden kann.

In weiterer Ausgestaltung kann die Befestigung des Profilkörpers an dem Rahmenprofil automatisch mit dem Einsetzen des Füllerelements in die Ausnehmung in dem Grundkörper des Profilkörpers erfolgen. Die Ausnehmung und das Füllerelement können hierzu derart ausgebildet sein, dass durch Einsetzen des Füllerelements in die Ausnehmung der Befestigungsabschnitt in ein Rahmenprofil einspannbar ist, wobei der Profilkörper durch das Rahmenprofil in dem Fensterausschnitt befestig ist. Wenn das Füllerelement den zweiten Aufnahmeabschnitt ausbildet, hat das Füllerelement gemäß dieser Ausführungsform somit drei Funktionen: Zum einen stellt es den zweiten Aufnahmeabschnitt bereit, der zum sicheren Aufnehmen der Fensterscheibe in der Aufnahme erforderlich ist. Zum anderen wird mit dem Einsetzen des Füllerelements die Fensterscheibe in der durch die beiden Aufnahmeabschnitte gebildeten Aufnahme eingespannt und somit sicher in der Aufnahme gehalten. Schließlich wird mit dem Einsetzen des Füllerelements der Befestigungsabschnitt des Profilkörpers in dem Rahmenprofil eingespannt, womit letztlich die Fensterscheibe in dem Fensterausschnitt befestigt wird.

Ferner wird die erfindungsgemäße Aufgabe gelöst durch ein Fenstersystem zum Einsetzen eines Fensters in eine Karosserie eines Fahrzeugs, insbesondere eines Fahrzeugs des öffentlichen Personentransports. Das erfindungsgemäße Fenstersystem weist ein an der Karosserie befestigbares Rahmenprofil auf, welches den Fensterausschnitt definiert. Weiterhin weist das Fenstersystem eine Fensterscheibe sowie einen erfindungsgemäß ausgebildeten Profilkörper auf. Der Profilkörper ist dabei an dem Rahmenprofil befestigt. Die Fensterscheibe ist in der Aufnahme des Profilkörpers aufgenommen, die durch den Aufnahmeabschnitt des Grundkörpers und den Aufnahmeabschnitt des Zusatzkörpers, insbesondere des Füllerelements, gebildet ist.

Insbesondere kann vorgesehen sein, dass die Ausnehmung und das Füllerelement durch Einsetzen des Füllerelements in die Ausnehmung in dem Grundkörper des Profilkörpers zum einen der Profilkörper in das Rahmenprofil einspannbar ist und zum anderen die Fensterscheibe in der Aufnahme des Profilkörpers einspannbar ist. Das Füllerelement hat demnach also zumindest zwei Funktionen. Zusätzlich kann das Füllerelement den zweiten Aufnahmeabschnitt ausbilden und somit als weitere Funktion der sicheren Aufnahme der Fensterscheibe dienen.

Hinsichtlich weiterer bevorzugter Ausführungsformen des erfindungsgemäßen Fenstersystems gelten die Ausführungen zu dem erfindungsgemäßen Profilkörper entsprechend.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einer Ausnehmung die Rede ist, so ist dies so zu verstehen, dass genau eine Ausnehmung, zwei Ausnehmungen oder mehrere Ausnehmungen vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine Vorderansicht eines in eine Karosserie eines Fahrzeugs eingesetzten Fenstersystems,
- Figur 2: eine Ausführungsform eines in ein Rahmenprofil eingesetzten Profilkörpers in einer geschnittenen Ansicht,
- Figur 3: einen Grundkörper des Profilkörpers gemäß Figur 2 in einer geschnittenen Ansicht,
- Figur 4: ein Füllerelement des Profilkörpers gemäß Figur 2 in einer geschnittenen Ansicht.

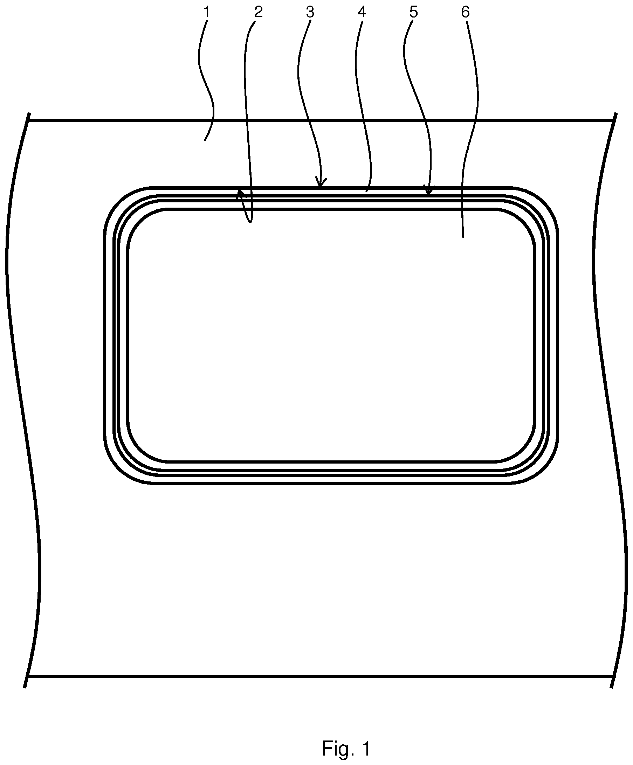

Figur 1 zeigt schematisch einen Ausschnitt einer Karosserie 1 eines Fahrzeugs mit einem Fensterausschnitt 2, in das ein erfindungsgemäßes Fenstersystem 3 eingesetzt ist. Es kann sich bei dem Fahrzeug z. B. um ein Schienenfahrzeug wie eine Straßenbahn oder eine U-Bahn handeln.

Das Fenstersystem 3 umfasst ein in den Fensterausschnitt 2 eingesetztes Rahmenprofil 4, einen Profilkörper 5 sowie eine Fensterscheibe 6. Die Fensterscheibe 6 ist an ihrem Rand von dem Profilkörper 5 umlaufend aufgenommen. Der Profilkörper 5 ist seinerseits umlaufend in das Rahmenprofil 4 eingesetzt und mit diesem befestigt.

Bei der in Figur 1 gezeigten Vorderansicht sind zwei Teile des Profilkörpers 5 erkennbar: zum einen sein Grundkörper 7, der einen ersten Aufnahmeabschnitt ausbildet, welcher an der in Figur 1 nicht sichtbaren Oberfläche der Fensterscheibe 6 anliegt, und zum anderen sein Füllerelement 8, welches einen zweiten Aufnahmeabschnitt ausbildet, welcher an der in Figur 1 sichtbaren, gegenüberliegenden Oberfläche der Fensterscheibe 6 anliegt. Die beiden Aufnahmeabschnitte definieren dabei eine Aufnahme des Profilkörpers 5, in der die Fensterscheibe 6 aufgenommen und gehalten ist. Das Füllerelement 8 hat bei dem gezeigten Ausführungsbeispiel drei Funktionen: Zum einen dient es dem Einspannen der Fensterscheibe 6 in der Aufnahme des Profilkörpers 5. Zum anderen dient es dem Einspannen des Profilkörpers 5 in das Rahmenprofil 4. Schließlich stellt das Füllerelement 8 einen erfindungsgemäßen Zusatzkörper 9 dar, der separat von dem Grundkörper 7 ausgebildet ist und der den zweiten Aufnahmeabschnitt ausbildet, der zusammen mit dem ersten Aufnahmeabschnitt die Aufnahme für die Fensterscheibe 6 bildet.

Anders als in den Figuren dargestellt, kann der Zusatzkörper auch als ein von dem Füllerelement separates Bauteil ausgebildet sein, das lösbar an dem Grundkörper befestigbar ist.

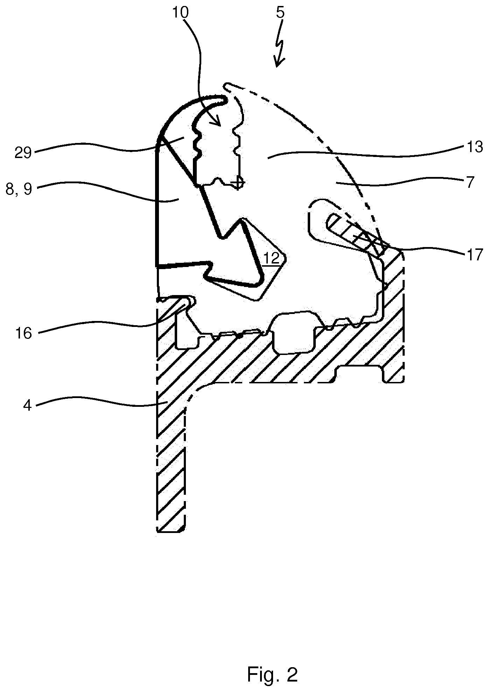

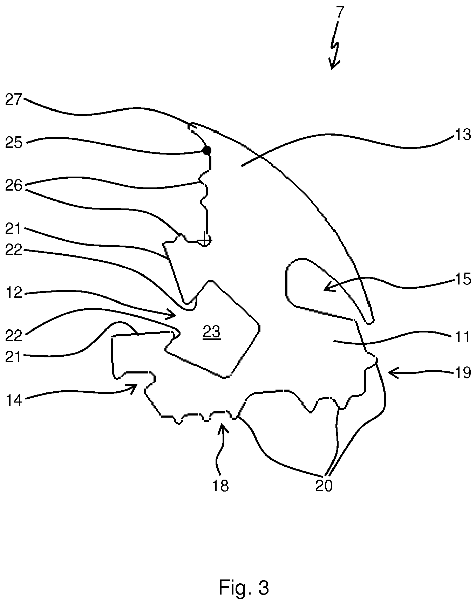

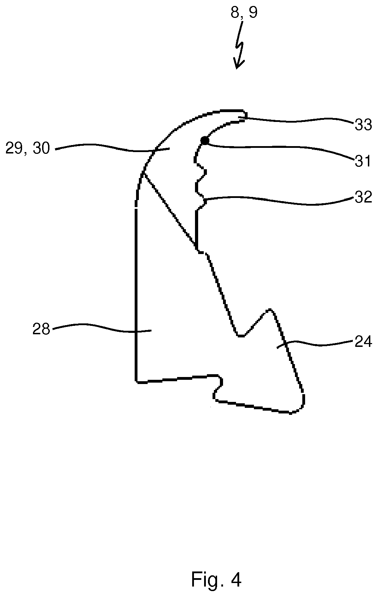

Die Einzelheiten zu einer möglichen Ausgestaltung des Profilkörpers 5 und insbesondere seines Grundkörpers 7 und seines Füllerelements 8 sind in den geschnittenen Ansichten in den Figuren 2 bis 4 dargestellt. Dabei zeigt Figur 2 den Profilkörper 5 mit dem in den Grundkörper 7 eingesetzten Füllerelement 8, wobei der Profilkörper 5 an einem Rahmenprofil 4 befestigt ist. Eine Fensterscheibe ist bei dem in Figur 2 gezeigten Ausführungsbeispiel jedoch nicht in die dafür vorgesehene Aufnahme 10 des Profilkörpers 5 eingesetzt. Die Figuren 3 und 4 zeigen demgegenüber den Grundkörper 7 und das Füllerelement 8 jeweils für sich.

Bei dem in den Figuren 2 und 3 gezeigten Ausführungsbeispiel umfasst der Grundkörper 7 im Wesentlichen drei funktionale Bereiche: einen Befestigungsabschnitt 11 zum Befestigen des Profilkörpers 5 an dem Rahmenprofil 4, eine Ausnehmung 12 für das Füllerelement 7 und einen ersten Aufnahmeabschnitt 13, die ein Teil der von dem Profilkörper 5 ausgebildeten Aufnahme 10 darstellt.

Im Bereich des Befestigungsabschnitts 11 sind zwei Vertiefungen 14, 15 ausgebildet, in die entsprechende Vorsprünge 16, 17 des Rahmenprofils 4 eingreifen können. Im Rahmen der Montage kann dabei der Grundkörper 7 so auf das Rahmenprofil 4 aufgesetzt werden, dass zunächst der Vorsprung 17 in die zugehörige Vertiefung 15 eintaucht. Unter Verformung des Grundkörpers 7 im Bereich der Vertiefung 14 und/oder Verformung des Vorsprungs 16 kann dann der Vorsprung 16 in die Vertiefung 14 einschnappen. Weiter weist der Befestigungsabschnitt 11 im Bereich seiner Bodenfläche 18 und an seiner Seitenfläche 19 mehrere rippenartige Vorsprünge 20 auf, mit denen Auflagepunkte bzw. Andruckpunkte definiert sind, über die der Grundkörper 7 an dem Rahmenprofil 4 anliegt. Eine Fixierung des Grundkörpers 7 in dem Rahmenprofil 4 wird erreicht, wenn das Füllerelement 8 in die in dem Grundkörper 7 vorgesehene Ausnehmung 12 eingesetzt wird. Durch das Einsetzen des Füllerelements 8 in die Ausnehmung 12 kommt es zu einer elastischen Verformung des Grundkörpers 7 im Bereich des Befestigungsabschnitts 11, wodurch der Grundkörper 7 mit seinem Befestigungsabschnitt 11 in dem Rahmenprofil 4 eingespannt und so sicher in diesem gehalten wird.

Wie in den Figuren 2 und 3 gezeigt, ragt die Ausnehmung 12 bei dem hier gezeigten Ausführungsbeispiel von der Seite her und leicht schräg nach unten in Richtung der Bodenfläche 18 in den Grundkörper 7 hinein. Im weiter außenliegenden Bereich der Ausnehmung 12 befinden sich Einführschrägen 21, die zu einem Absatz 22 führen, an den sich schließlich ein topfartig geformter Bereich 23 mit größerem freien Querschnitt als im Bereich des Absatzes 22 anschließt. Der Absatz 22 stellt somit eine Art Rastnase dar, hinter die ein entsprechend geformtes Rastelement 24 des Füllerelements 8 einrasten kann.

Der erste Aufnahmeabschnitt 13 definiert eine Anlagefläche 25, mit der der erste Aufnahmeabschnitt 13 an einer in der Aufnahme 10 eingesetzten Fensterscheibe anliegt. Die Anlagefläche 25 weist in der in den Figuren 2 und 3 gezeigten Querschnittsansicht grob die Form eines L auf, wobei beide Schenkel des L mit der Fensterscheibe in Kontakt kommen. D. h. die Fensterscheibe wird sowohl seitlich als auch frontal von dem ersten Aufnahmeabschnitt 13 umgriffen. Im Bereich der Anlagefläche 25 sind mehrere rippenartige Vorsprünge 26 vorgesehen, die - ähnlich wie die Vorsprünge 20 im Bereich des Befestigungsabschnitts 11 - Auflagepunkte bzw. Andruckpunkte definieren, über die der erste Aufnahmeabschnitt 13 an der Fensterscheibe anliegt. Außerdem ist stirnseitig am ersten Aufnahmeabschnitt 13 eine Dichtlippe 27 angeformt, welche im montierten Zustand dichtend an der Oberfläche der Fensterscheibe anliegt, so dass einem Eindringen von Feuchtigkeit oder Schmutz vorgebeugt werden kann.

Das in den Figuren 2 und 4 im Detail gezeigte Füllerelement 8 weist im Wesentlichen zwei funktionale Bereiche auf: einen Spannschenkel 28 und den zweiten Aufnahmeabschnitt 29. Bei dem hier gezeigten Ausführungsbeispiel ist der zweite Aufnahmeabschnitt 29 als ein von dem Spannschenkel 28 abragender Aufnahmeschenkel 30 ausgebildet.

Der Spannschenkel 28 weist einen pfeilartig geformten Querschnitt mit einem endseitig angeformten Rastelement 24 auf. Durch diese Formgebung kann der Spannschenkel 28 leicht in die Ausnehmung 12 in dem Grundkörper 7 eingeführt werden, bis das Rastelement 24 hinter die durch den Absatz 22 ausgebildete Rastnase einschnappt. Die Abmessungen des Spannschenkels 28 sind dabei etwas größer als die der Ausnehmung 12 in dem Grundkörper 7, so dass es beim Einsetzen des Spannschenkels 28 zu einer elastischen Verformung des Grundkörpers 7 kommt, wie es erforderlich ist, um einerseits die Fensterscheibe in der Aufnahme 10 und anderseits den Profilkörper 5 in dem Rahmenprofil 4 einzuspannen.

Der Aufnahmeschenkel 30 ragt unter einem Winkel von etwa 120° von dem Spannschenkel 28 ab. Der Aufnahmeschenkel 30 bildet eine im entspannten Zustand leicht bogenförmige Anlagefläche 31 aus, mit der der Aufnahmeschenkel 30 im montierten Zustand frontal an der Fensterscheibe anliegt. Wie im Bereich der der Anlagefläche 25 des ersten Aufnahmeabschnitts 13 weist auch die Anlagefläche 31 des zweiten Aufnahmeabschnitts 29 mehrere rippenartige Vorsprünge 32 auf, die Auflagepunkte bzw. Andruckpunkte definieren, über die der zweite Aufnahmeabschnitt 29 an der Fensterscheibe anliegt. Außerdem ist - ebenfalls wie beim ersten Aufnahmeabschnitte 13 - stirnseitig eine Dichtlippe 33 angeformt, welche im montierten Zustand dichtend an der Oberfläche der Fensterscheibe anliegt. So kann auch auf dieser Seite der Fensterscheibe verhindert werden, dass Feuchtigkeit oder Schmutz in die Aufnahme 10 eindringen können.

Der Aufnahmeschenkel 30 und der Spannschenkel 28 sind bei dem in den Figuren 2 und 4 gezeigten Ausführungsbeispiel integral von dem Füllerelement 8 ausgebildet. Allerdings sind der Aufnahmeschenkel 30 und der Spannschenkel 28 (wie durch die sich schräg durch das Füllerelement 8 erstreckende Linie angedeutet) aus verschiedenen Werkstoffen hergestellt. Konkret ist der Aufnahmeschenkel 30 aus einem elastischeren Werkstoff hergestellt als der Spannschenkel 28. So können die beiden Schenkel 28, 30 mit unterschiedlichen mechanischen Eigenschaften versehen werden, wie sie für die jeweiligen Funktionen erforderlich sind. Insbesondere kann sich der elastischere Aufnahmeschenkel 30 besonders gut an eine Fensterscheibe anlegen. Demgegenüber ist der weniger elastische Spannschenkel 28 zwar hinreichend elastisch, um in die Ausnehmung 12 in dem Grundkörper 7 eingesetzt werden und dort verrasten zu können. Allerdings ist eher auch ausreichend steif, so dass sich die Verrastung nicht schon bei geringen Belastungen löst. Auch ist eine ausreichende Steifigkeit des Spannschenkels 28 wichtig, damit er - wenn er in die Ausnehmung 12 eingesetzt ist - eine Verformung des Profilkörpers 5 im Bereich des Befestigungsabschnitts 11 und im Bereich der Aufnahme 10 bewirkt, durch die einerseits der Profilkörper 5 in dem Rahmenprofil 4 eingespannt wird und andererseits die Fensterscheibe in der Aufnahme 10 eingespannt wird.

Wie bereits ausgeführt, bilden die beiden Aufnahmeabschnitte 13, 29 gemeinsam die Aufnahme 10 des Profilkörpers 5. Die sich so ergebende Aufnahme 10 hat dabei einen im Wesentlichen U-förmigen freien Querschnitt, in dem ein Rand der Fensterscheibe aufgenommen werden kann. Dabei umschließen die Anlageflächen 25, 31 die Fensterscheibe umlaufend an ihrem Rand, sodass die Fensterscheibe sicher in der Aufnahme 10 aufgenommen und gehalten werden kann.

Indem die beiden Aufnahmeabschnitte 13, 29 von separaten Bauteilen des Profilkörpers 5 ausgebildet werden, kann die Fensterscheibe auf besonders einfache Weise montiert bzw. demontiert werden. Im Rahmen der Montage kann die Fensterscheibe direkt zur Anlage an die Anlagefläche 25 des ersten Aufnahmeabschnitts 13 gebracht werden, ohne dass hierfür die Aufnahme 10 aufgeformt werden muss, z. B. durch Wegbiegen des zweiten Aufnahmeabschnitts 29. Dies ist nicht erforderlich, da während des Einsetzens der Fensterscheibe der zweite Aufnahmeabschnitt 29 noch fehlt und die Aufnahme 10 somit noch nicht vollständig ausgebildet ist. Dies erfolgt erst im nachfolgenden Montageschritt, wenn das Füllerelement 8 in die Ausnehmung 12 in dem Grundkörper 7 eingesetzt wird. Erst dann wird die Aufnahme 10, in der die Fensterscheibe aufgenommen ist, vollständig ausgebildet, so dass die Fensterscheibe randseitig umlaufend von dem Profilkörper 5 umschlossen ist. Gleichzeitig wird durch das Einsetzten des Füllerelements 8 in die Ausnehmung 12 die Fensterscheibe in der Aufnahme 10 eingespannt, so dass die Fensterscheibe sicher von dem Profilkörper 5 gehalten wird.

Zur Demontage der Fensterscheibe kann das Füllerelement 8 wieder aus der Ausnehmung 12 entfernt werden. Dadurch löst sich zum einen die Spannung im Bereich der Aufnahme 10. Zum anderen wird mit dem Füllerelement 8 der zweite Aufnahmeabschnitt 29 entfernt, so dass die Fensterscheibe auf einfache Weise und ohne Behinderung durch den Entnahmeweg versperrende Bauteile aus dem Profilkörper 5 entnommen werden kann.

### Bezugszeichenliste:

- 1: Karosserie
- 2: Fensterausschnitt
- 3: Fenstersystem
- 4: Rahmenprofil
- 5: Profilkörper
- 6: Fensterscheibe
- 7: Grundkörper
- 8: Füllerelement
- 9: Zusatzkörper
- 10: Aufnahme
- 11: Befestigungsabschnitt
- 12: Ausnehmung
- 13: erster Aufnahmeabschnitt
- 14: Vertiefung
- 15: Vertiefung
- 16: Vorsprung
- 17: Vorsprung
- 18: Bodenfläche
- 19: Seitenfläche
- 20: Vorsprung
- 21: Einführschräge
- 22: Absatz
- 23: Bereich
- 24: Rastelement
- 25: Anlagefläche
- 26: Vorsprung
- 27: Dichtlippe
- 28: Spannschenkel
- 29: zweiter Aufnahmeabschnitt
- 30: Aufnahmeschenkel
- 31: Anlagefläche
- 32: Vorsprung
- 33: Dichtlippe

## Patentansprüche

1. Profilkörper (5) zum Aufnehmen und Halten einer Fensterscheibe (6) in einem Fensterausschnitt (2) einer Karosserie (1) eines Fahrzeugs, insbesondere eines Fahrzeugs des öffentlichen Personentransports, mit
- einer Aufnahme (10) zum Aufnehmen der Fensterscheibe (6) und
- einer in einem Grundkörper (7) des Profilkörpers (5) vorgesehenen Ausnehmung (12), in die ein Füllerelement (8) des Profilkörpers (5) einsetzbar ist,
wobei die Ausnehmung (12) und das Füllerelement (8) derart ausgebildet sind, dass durch Einsetzen des Füllerelements (8) in die Ausnehmung (12) eine in der Aufnahme (10) aufnehmbare Fensterscheibe (6) in der Aufnahme (10) einspannbar ist,
**dadurch gekennzeichnet, dass**
- der Profilkörper (5) einen separat von dem Grundkörper (7) ausgebildeten Zusatzkörper (9) aufweist, der lösbar an dem Grundkörper (7) befestigt ist, und
- die Aufnahme (10) gebildet ist
- einerseits durch einen von dem Grundkörper (7) ausgebildeten, ersten Aufnahmeabschnitt (13) und
- andererseits durch einen von dem Zusatzkörper (9) ausgebildeten, zweiten Aufnahmeabschnitt (29).

2. Profilkörper (5) nach Anspruch 1,
**dadurch gekennzeichnet, dass**
der Zusatzkörper (9) und/oder das Füllerelement (7) und/oder der Grundkörper (7) aus einem elastomeren Werkstoff hergestellt sind/ist.

3. Profilkörper (5) nach einem der vorhergehenden Ansprüche,
**dadurch gekennzeichnet, dass**
der Zusatzkörper (9) das Füllerelement (7) ist und der zweite Aufnahmeabschnitt (29) von dem Füllerelement (7) ausgebildet ist.

4. Profilkörper (5) nach Anspruch 3,
**dadurch gekennzeichnet, dass**
das Füllerelement (8)
- einen Spannschenkel (28), der - wenn das Füllerelement (8) in die Ausnehmung (12) eingesetzt ist - zumindest teilweise in die Ausnehmung (12) hineinragt, und
- einen als zweiten Aufnahmeabschnitt (29) wirkenden Aufnahmeschenkel (30), der von dem Spannschenkel (28) abragt,
aufweist.

5. Profilkörper (5) nach Anspruch 4,
**dadurch gekennzeichnet, dass**
der Aufnahmeschenkel (30) unter einem Winkel im Bereich von 100° bis 140°, insbesondere im Bereich von 120°, von dem Spannschenkel (28) abragt.

6. Profilkörper (5) nach einem der Ansprüche 3 bis 5,
**dadurch gekennzeichnet, dass**
das Füllerelement (8), insbesondere sein Spannschenkel (28), aus einem weniger elastischen Werkstoff ausgebildet ist als der zweite Aufnahmeabschnitt (29).

7. Profilkörper (5) nach Anspruch 6,
**dadurch gekennzeichnet, dass**
- die Härte des zweiten Aufnahmeabschnitts (29) im Bereich von 50 bis 70 Shore, insbesondere im Bereich von 60 Shore, liegt und
- die Härte des Füllerelements (8), insbesondere seines Spannschenkels (28), im Bereich von 71 bis 90 Shore, insbesondere im Bereich von 80 Shore, liegt.

8. Profilkörper (5) nach einem der vorhergehenden Ansprüche,
**dadurch gekennzeichnet, dass**
der zweite Aufnahmeabschnitt (29) einstückig mit dem Zusatzkörper (9), insbesondere dem Füllerelement (8), ausgebildet ist.

9. Profilkörper (5) nach einem der vorhergehenden Ansprüche,
**dadurch gekennzeichnet, dass**
der Zusatzkörper (9), insbesondere das Füllerelement (8), mit dem von ihm ausgebildeten zweiten Aufnahmeabschnitt (29) als ein Koextrusionsteil hergestellt ist.

10. Profilkörper (5) nach einem der vorhergehenden Ansprüche,
**dadurch gekennzeichnet, dass**
die Aufnahmeabschnitte (13, 29) derart geformt ist, dass die Aufnahme (10) einen im Wesentlichen U-förmigen freien Querschnitt zum Aufnehmen der Fensterscheibe (6) aufweist.

11. Profilkörper (5) nach einem der vorhergehenden Ansprüche,
**dadurch gekennzeichnet, dass**
jeder Aufnahmeabschnitt (13, 29) eine angeformte Dichtlippe (27, 33) aufweist zur abdichtenden Aufnahme der Fensterscheibe (6) in der Aufnahme (10).

12. Profilkörper (5) nach einem der vorhergehenden Ansprüche,
**dadurch gekennzeichnet, dass**
der Profilkörper (5) einen Befestigungsabschnitt (11) zum Befestigen des Profilkörpers (5) an der Karosserie (1) aufweist.

13. Profilkörper (5) nach Anspruch 12,
**dadurch gekennzeichnet, dass**
die Ausnehmung (12) und das Füllerelement (8) derart ausgebildet sind, dass durch Einsetzen des Füllerelements (8) in die Ausnehmung (12) der Befestigungsabschnitt (11) in ein Rahmenprofil (4) zum Befestigen des Profilkörpers (5) in dem Fensterausschnitt (2) einspannbar ist.

14. Fenstersystem (3) zum Einsetzen eines Fensters in eine Karosserie (1) eines Fahrzeugs, insbesondere eines Fahrzeugs des öffentlichen Personentransports, mit
- einem an der Karosserie (1) befestigbaren Rahmenprofil (4),
- einer Fensterscheibe (6) und
- einem Profilkörper (5) nach einem der vorhergehenden Ansprüche,
wobei die Fensterscheibe (6) in der durch den ersten Aufnahmeabschnitt (13) des Grundkörpers (7) und den zweiten Aufnahmeabschnitt (29) des Zusatzkörpers (9), insbesondere des Füllerelements (8), gebildeten Aufnahme (12) des Profilkörpers (5) aufgenommen ist und
wobei der Profilkörper (5) an dem Rahmenprofil (4) befestigt ist.

15. Fenstersystem (3) nach Anspruch 14,
**dadurch gekennzeichnet, dass**
die Ausnehmung (12) und das Füllerelement (8) derart ausgebildet sind, dass durch Einsetzen des Füllerelements (8) in die Ausnehmung (12)
- einerseits der Profilkörper (5) in das Rahmenprofil (4) einspannbar ist und
- andererseits die Fensterscheibe (6) in der Aufnahme (10) des Profilkörpers (5) einspannbar ist.
